# EUROPEAN PATENT APPLICATION

(11) **EP 1 195 711 A2**
(43) Date of publication of application: **10.04.2002**
(21) Application number: 01307781.3
(22) Date of filing: 12.09.2001
(51) Int. Cl.: G06K 15/00, G06F 3/12, H04L 12/28

(54) **Method and apparatus for sending print requests via a wireless communication device**

(30) Priority: 13.09.2000 US 662372
(71) Applicant: HEWLETT-PACKARD COMPANY, Palo Alto, California 94304-1181 (US)
(72) Inventor: Quinn, Catherine K., Albany, OR 97321 (US)
(74) Representative: Jackson, Richard Eric

(57) **Abstract**

A user accesses one or more data units via a wireless communication unit. The data units may be accessed through an electronic assistant or similar service. The user can then cause print requests uniquely corresponding to particular data units to be transmitted via the wireless communication unit. In turn, the print requests cause the particular data units to be stored to a print queue. The one or more data units in the print queue are then printed in accordance with a prescheduled or user-selected printing time, or on an as needed basis according to periodic checks of the print queue. In this manner, printing data via a wireless communication unit is conveniently and reliably provided.

## Description

### Technical Field

The present invention relates generally to wireless communication systems and, in particular, to a method and apparatus for printing data units via wireless communication units in such systems.

### Background of The Invention

Wireless communication systems are generally well known in the art. In particular, wireless communication units, e.g., handheld cell phones, two-way pagers, personal digital assistants (PDAs) and other two-way wireless communication devices are increasingly becoming a part of everyday life. A benefit of such devices is the ability to remotely manage a significant amount of information. For example, currently available cell phones allow a user to access voice mail and e-mail messages, or content on the Internet and World Wide Web.

Furthermore, the advent of electronic assistants, sometimes referred to as virtual assistants or automated attendants, has also expanded one's ability to manage personal communications. An example of such an electronic assistant is provided by the Visto Corporation. These systems allow subscribers to set up personalized, password protected accounts to send and receive messages such as email and voice mail. Other providers of such services in addition to Visto are known in the art.

While the use of wireless communication units and/or electronic assistants has greatly enhanced the individual's ability to manage information from a variety of sources, these technologies currently do not support, or provide only limited support for, reducing data to a printed form. That is, a user who, for example, accesses his or her e-mail via an electronic assistant or the World Wide Web using a cell phone typically cannot cause, in a simple fashion, any of the data they access to be printed or otherwise reduced to a tangible form. Of course, if an individual carries a portable printer and has the ability to wirelessly download data to a device capable of communicating with the portable printer, then it may be possible to print such data. However, because most individuals do not want to transport multiple devices with them wherever they may go, this solution is largely impractical.

One prior art technique for circumventing this problem is provided by Webley Systems, Inc. through their electronic assistant. In particular, the Webley system allows a subscriber to access their email via a cell phone using text-to-speech conversion. Using speech recognition technology, the Webley system further allows the subscriber to speak the name of a contact or fax machine number such that the email is then forwarded to the fax machine for printing. While this system allows subscribers to convert email to printed form, it necessarily relies on the targeted fax machine being available for use. That is, if the targeted fax machine is currently busy, the forwarded email will not be printed, most likely requiring further user intervention to ensure that the email has been printed. Thus, it would be advantageous to provide a technique that allows a user to conveniently and remotely print data via a wireless device, without the need for multiple devices. Such a method should ensure that printing would occur without the need for further user intervention.

### Summary of The Invention

The present invention provides a technique for printing data via a wireless communication unit. More particularly, a user can access one or more data units via his or her wireless communication unit, such as a cell phone, personal digital assistant, two-way pager or other two-way wireless device. Alternatively, information regarding the one or more data units may be provided to the wireless communication unit. In the context of the present invention, a data unit is any type of discrete, uniquely identifiable information item (including, but not limited to, voice mail messages, e-mail messages and network-based content) that is accessible through, and rendered intelligibly by, a wireless communication unit. In one embodiment of the present invention, the data units may be accessed through an electronic assistant or similar service. Based on the information provided about the one or more data units, or the one or more data units themselves, a user can cause print requests uniquely corresponding to particular data units to be transmitted via the wireless communication unit. In turn, the print requests cause the particular data units to be stored to a print queue. The one or more data units in the print queue are then printed in accordance with a prescheduled or user-selected printing time, or on an as needed basis according to periodic checks of the print queue. In this manner, the present invention provides a convenient, simple technique for printing data via a wireless communication unit. These and other advantages will be apparent from the detailed description that follows.

### Brief Description of the Drawings

FIG. 1 is a block diagram of a wireless communication system operating in conjunction with an automated document delivery system in accordance with the present invention.
FIG. 2 is a block diagram of a wireless communication unit in accordance with the present invention.
FIG. 3 is a flowchart illustrating a method for printing via a wireless communication device in accordance with an embodiment of the present invention.
FIG. 4 is a flowchart illustrating operation of a wireless communication unit in accordance with another embodiment the present invention.
FIG. 5 is a flowchart illustrating operation of infrastructure equipment in accordance with yet another embodiment of the present invention.

### Detailed Description of the Preferred Embodiment

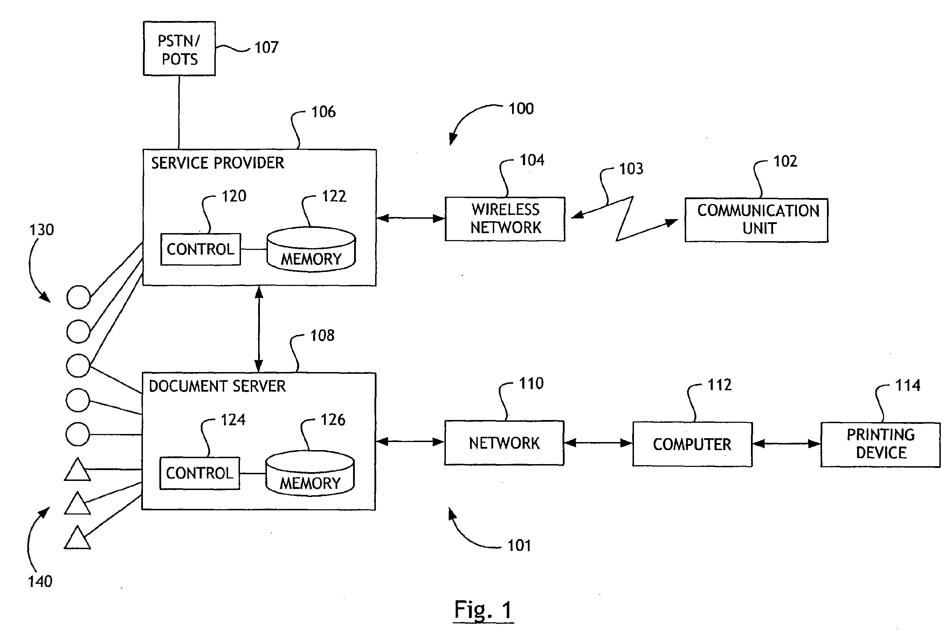

The present invention may be more fully described with reference to FIGS. 1-5. FIG. 1 illustrates a wireless communication system 100 operating in conjunction with an automated document delivery system 101. The wireless communication system 100 comprises one or more communication units 102 (only one shown) in communication with a wireless network 104 via a suitable wireless communication medium 103. The wireless communication units 102 may comprise any device capable of two-way wireless communications including, but not limited to, cellular telephones, personal digital assistants, two-way pagers or suitably equipped personal computers. The wireless media 103 may comprise, for example, radio frequency or infrared carriers modulated using any of several well known techniques (such as time, frequency or code division multiplexing) and implementing any of several well known protocols (such as any cellular, two-way paging or other two-way communication standards). In a preferred embodiment, the so-called Wireless Application Protocol (WAP) standard is used for accessing content on the Internet or World Wide Web. The wireless network 104 comprises those infrastructure elements needed to support wireless communications with the communication units 102; such elements are well known to those having ordinary skill in the art and are not described in further detail herein.

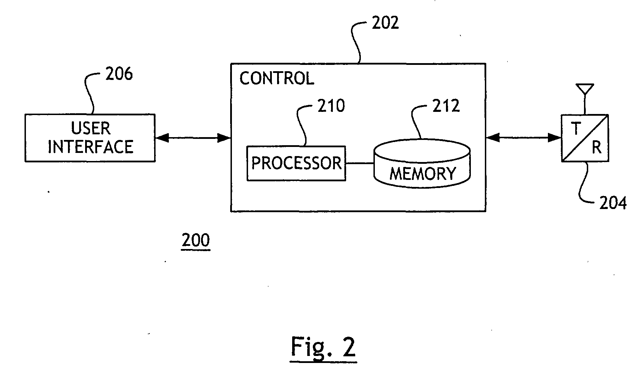

An exemplary wireless communication unit 200 in accordance with the present invention is further illustrated in FIG. 2. In particular, the wireless communication unit 200 comprises a control function 202 coupled to a wireless transceiver 204 and a user interface 206. Preferably, the control function comprises a processor 210 (such as a microprocessor, microcontroller, digital signal processor or the like, or combinations of such devices) operatively coupled to a memory 212 (such as volatile or non-volatile storage devices or combinations thereof, including, but not limited to random access memory, read-only memory and the like). Suitable software routines and algorithms used to control operation of the wireless communication unit 200 are stored in the memory 212 and executed by the processor 210. Furthermore, the control function 202 additionally comprises any interface circuitry and/or firmware needed to support the control operations and to provide communications between the control function 202 and the transceiver 204 and the user interface 206. The transceiver 204 supports wireless communications and includes the capability to modulate and demodulate a wireless carrier, as known in the art. In the context of FIG. 1, the wireless transceiver 204 supports the communication link 103 between the wireless communication unit 102 and the wireless network 104.

The user interface 206 comprise input and output devices that allow a user to operate the unit 200. Output devices may include a speaker or annunciator for providing audible output, and a display device for providing visual output. The input device may include a microphone for receiving audible input, including voice input, a keypad or keyboard for providing alphanumeric input, user-activated switches or buttons or any other type of input device known in the art. In a preferred embodiment, the user interface 206 also comprises speech recognition functionality. Those having ordinary skill in the art will recognize that such functionality need not be confined to the user interface 206, and could be distributed between the user interface 206 and the control function 202, or implemented entirely by the control function 202. Additionally, the user interface may also comprise text-to-speech conversion functionality such the text-based information may be provided as audible output. Again, such functionality may be implemented in a centralized or distributed fashion as a matter of design choice.

In a preferred embodiment, electronic assistant services are provided to users of one or more of the communication units 102 via a service provider 106, such as Visto or Webley. For example, Webley offers a personal electronic assistant that is a stand-alone single mailbox service accessed directly by a single, personal telephone number. Alternatively, Webley offers a corporate electronic assistant in which a single number acts as an auto attendant front-end for several individual mailboxes. Likewise, Visto offers a Web-based communication service that can be remotely accessed via a wireless communication device. Regardless, the service provider 106 is coupled to the public switched telephone network (PSTN), sometimes referred to as the plain old telephone system (POTS). The service provider 106 is linked to the automated document delivery system 101 via a communication path that allows the transfer of traffic and control data between the service provider 106 and a document server 108, described in greater detail below. Additionally, the service provider 106 may receive inputs from one or more content providers 130 via public or private data networks. For example, the content providers 130 may comprise web sites accessed through the World Wide Web, or commercially available database providers such as "DIALOG" or "LEXIS/NEXIS". Control 120 and memory 122 are implemented within the service provider 106 such that subscribers to the electronic assistant service are provided with personalized, password protected accounts. Although not shown, access to the content providers 130 may be provided directly through the wireless network 104 such that the user need not go through the service provider 106 to access the content providers 130.

In a preferred embodiment, the automated document delivery system 101 comprises a document server 108 operatively coupled via a network 110 to a computer 112 and printing device 114. Such a system is described in U.S. Patent Application Serial Number 09/325,040 filed June 7, 1999 and entitled DOCUMENT DELIVERY SYSTEM FOR AUTOMATICALLY PRINTING A DOCUMENT ON A PRINTING DEVICE, the teachings of which application are hereby incorporated by reference. A commercially available example of such a system is the Hewlett-Packard Instant Delivery (HPID) service, wherein subscribers can have documents automatically delivered to printers of their choosing.

In particular, the document server 108 comprises control 124 and memory 126 suitable for storing documents for automatic delivery to the printing device 114. The server 108 preferably receives inputs from one or more content providers 130, and/or one or more advertising providers 140. The document server 108 preferably comprises a minicomputer/server, such as an HP 9000 server sold by the Hewlett-Packard Company, although those skilled in the art will appreciate that the document server 108 could be any other type of computing or electronic device(s) that performs the functions described herein. The network 110 is preferably the Internet or World Wide Web, although an intranet, local area network, or other type of public or private network, either wired (e.g., telephone, cable TV, etc) or wireless (e.g., satellite, radio, cell phone, etc), could also or additionally be used.

The printing device 114 comprises any device capable of reducing electronically represented data into a tangible form and preferably comprises a desktop printer, examples of which include inkjet or laser printers manufactured by the Hewlett-Packard Company. The printing device 114 preferably comprise a printer, such as the HP DeskJet 890 printer, HP LaserJet V printer, or other models of printers manufactured by the Hewlett-Packard Company or others. Alternatively, the printing device 114 may comprise a so-called "mopier" or other multi-function printing devices that can print, fax, scan, and/or copy, or any other device capable of transferring information to a printable media such as plain paper, specialty paper, transparencies, or other media capable of tangibly receiving such information and which can be easily carried about by the user. The computer 112 is preferably a personal computer or the like but may, in general, comprise any computing platform capable of communicating with the printing device 114 including, for example, a set top box, television set, palmtop PDA or other type of electronic device coupled to the network 110. Although a single combination of the computer 112 and printing device 114 is illustrated in FIG. 1, those having ordinary skill in the art will recognize that a plurality of such systems can be coupled to the document server 108 via the network 110. Furthermore, the printing device 114 may comprise sufficient control functionality such that an intervening computer is not required, thereby allowing direct connection to the network 114.

As described above, FIG. 1 illustrates the use of a service provider 106 as a link between the wireless network 104 and the document server 108. This arrangement is desirable because of the rich functionality current available through electronic assistants provided by currently available service providers, such as Visto or Webley. However, those having ordinary skill in the art will recognize that the use of such service providers is not a necessity. For example, the wireless network 104 could be directly coupled to the service provider 106 and the document server 108. In this scenario, the wireless network 104 comprises the functionality (described below) such that data units available to the communication unit 102 through the service provider 106 are provided to the document server 108 by the wireless network 104. Alternatively, the wireless network 104 could be coupled to only the document server 108. These are but two examples of the variety of configurations that those having ordinary skill in the art could readily devise, and the present invention is not limited in this regard.

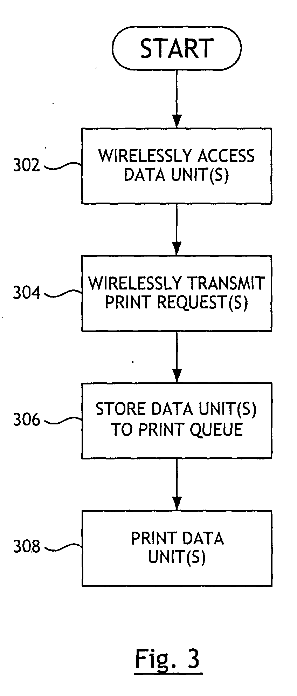

Turning now to FIG. 3, a flowchart illustrating a method for printing via a wireless communication device is shown. At step 302, a wireless communication unit accesses one or more data units. In the context of the present invention, a data unit is a data unit is any type of discrete, uniquely identifiable information item (including, but not limited to, voice mail messages, e-mail messages and network-based content) that is accessible through, and rendered intelligible by, a wireless communication unit. Additionally, as used herein, the step of accessing a data unit includes those steps necessary to present the data unit to a user of a wireless communication unit. Thus, a step of accessing in the context of the present invention would typically comprise a request to receive a data unit (as in the case of a user requesting to view a given Web page, for example), possibly coupled with a prior step of receiving a notification of a data unit (as in the case where a user is informed that he/she has email waiting), followed by steps of wirelessly receiving the data units and rendering them intelligible (e.g., audibly reproducing a voice or email message via a speaker, or visibly providing a text message on a display). For the purposes of the present invention, it is generally assumed that the one or more data units available to a given communication unit are stored or are otherwise available with the communication infrastructure, e.g., within the wireless network 104, the service provider 106, the content or advertising providers 130, 140 or the document server 108.

Once a data unit has been accessed, a user of a wireless communication unit may desire to have one or more of the data units reduced to tangible form. To this end, at step 304, one or more print requests are wireless transmitted. Preferably, a separate and uniquely corresponding print request is transmitted for each data unit that the user desires to print. Alternatively, it may be desirable to transmit a single batch print request corresponding to a plurality of data units. Regardless, the print requests either inherently or explicitly identify the particular data units to which they correspond. Furthermore, each print request either inherently or explicitly identifies a targeted printing device such that different data units could be output by different printing devices. Thus, for example, a particular data unit related to a user's work can be targeted to an office printer, whereas a data unit related to personal matters can be targeted to a home based printer.

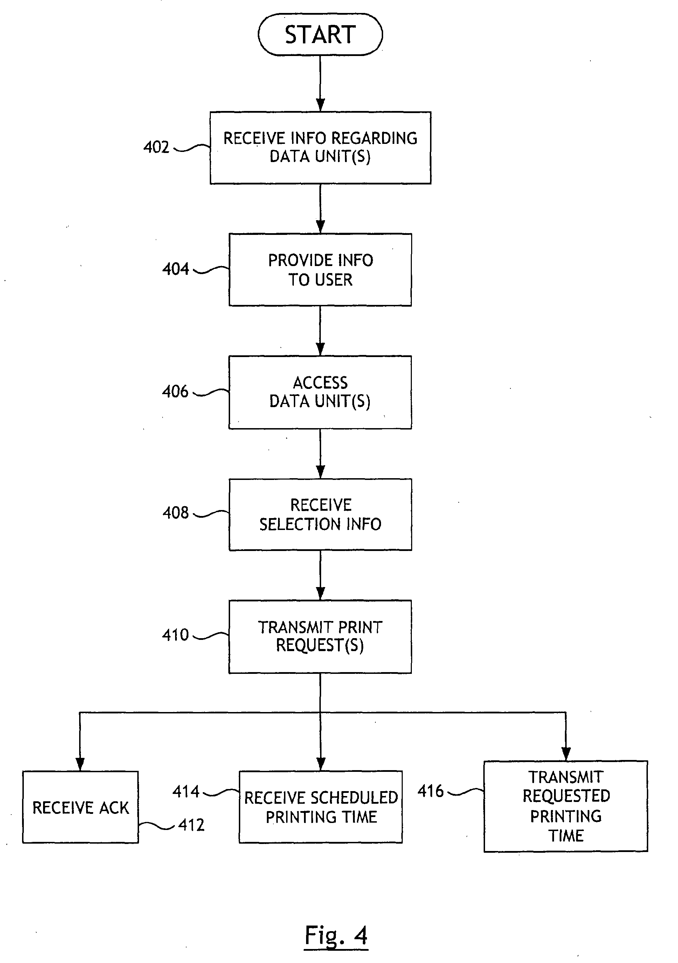

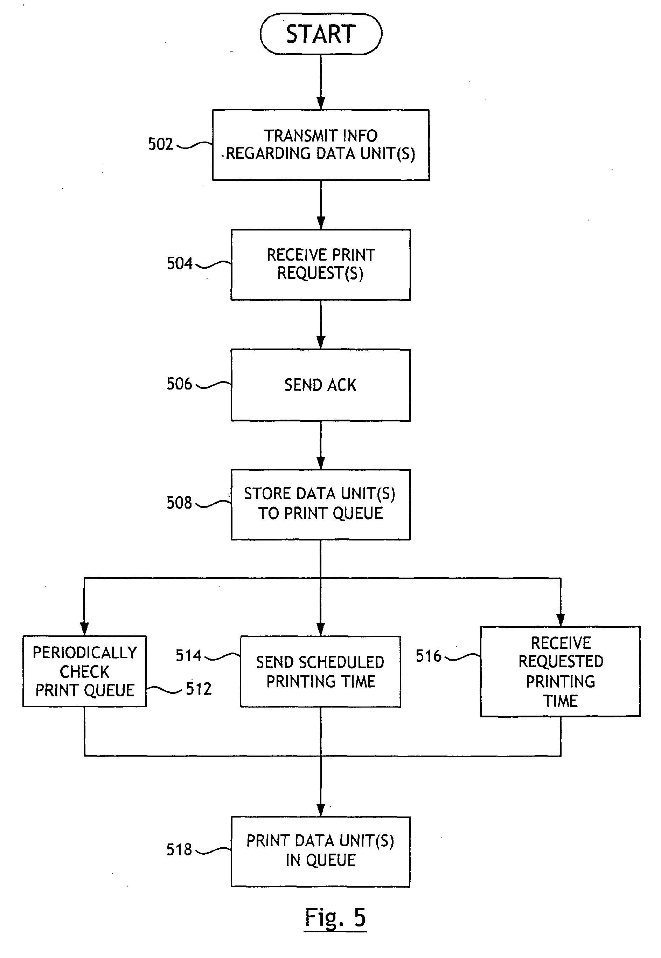

The one or more print requests transmitted at step 304 cause the desired data units to be stored to a print queue at step 306. In a preferred embodiment, the print queue resides within a centrally located storage location, e.g., the document server 108 shown in FIG. 1. The particular advantage of such a print queue is that it may be automatically managed by a suitable control function such that further user intervention is not required to ensure that the stored data units are printed as requested. More detailed description of the operation of such a print queue will be described in greater detail below with reference to FIGS. 4 and 5.

Finally, at step 308, the respective targeted printing devices print the data units stored in the print queue. In one embodiment of the present invention, a predetermined scheduled printing time initiates provision of the stored data units to the targeted printing device. Alternatively, a requested printing time may be provided as part of or subsequent to a given print request such that a specific printing time is provided. In yet another embodiment, periodic polling of the print queue may take place; when data units are found in the print queue, they are subsequently sent to the targeted printing device. Regardless, the technique described in FIG. 3 represents an advancement over prior art solutions in that it provides a convenient and reliable means for printing data units via a wireless communication device.

FIG. 4 illustrates operation of a wireless communication unit in accordance with one embodiment of the present invention. Preferably, the steps illustrated in FIG. 4 are implemented using stored software routines executed by a suitable processing platform in conjunction with the necessary input and output interfaces. At step 402, the wireless communication unit receives at information regarding at least one data unit. The information received at step 402 serves to notify a user of the wireless communication unit of the existence of the corresponding data units and, optionally, at least some of the content of the data unit(s). Such information may take a variety of forms (e.g., alphanumeric text, audio or video data, etc.) as a matter of design choice. In the context of the present invention, data units may be either specifically targeted to a user, as in the case of an email or voice mail message, or may be publicly available for access by the user, as in the case of a Web page or file in a commercial data base.

In the former scenario (targeted data units), the step of receiving information regarding the data units typically comprises receiving notification that a user has been targeted to receive the data unit(s). In this case, the received information is provided to the user at step 404. For example, where the received information comprises a list of unopened email or the information that is being "pushed" to the user (as in the case of advertising content), step 404 may comprise displaying the list using a visual display or converting the list to audible form using text-to-speech conversion. Those having ordinary skill in the art will recognize that a variety of techniques may be used to provide such information to a user of a wireless communication unit. In response to the information provided, the user can, at step 406, access the data units as described above. In an alternative embodiment, the step of receiving information regarding targeted data units may instead comprise receiving the data units themselves. Stated another way, rather than receiving notifications about pending data units, the data units are directly provided. For example, voice mail messages or the like are automatically provided to the user without the intervening steps of notifying the user. In this case, steps 402 and 406 are effectively merged together.

In the latter scenario (publicly available data units), the step of receiving information regarding the data units typically comprises receiving the data units themselves. This step may be proceeded by a request from the user (via the wireless communication unit; not shown) for the particular data unit(s). For example, a user may request to view a Web page or file in a commercial data base whereupon, at step 402, the Web page or file is provided to the user. Step 404 proceeds as before and, again, step 406 is effectively merged into step 402.

Regardless of the what type of information is presented to the user, or the manner in which it is presented, the wireless communication unit receives, at step 408, selection information in response to the information provided. That is, the user of the wireless communication unit, having perceived the information provided, can manifest his/her intention to have a particular data unit printed by activating an appropriate input device, e.g., pressing a button, selecting a menu entry, using voice commands, etc. The selection data uniquely corresponds to at least one data unit and may optionally include identification of a targeted printing device and/or a requested printing time. Thus, a group of data units may be referenced by one instance of selection information or, alternatively, multiple instances of selection information, each uniquely corresponding to a single data unit. In response to the selection information, the wireless communication unit at step 410 wirelessly transmits print requests. In the case of multiple instances of selection information, separate print request are preferably transmitted for each instance of selection information, although other techniques could be used. The print requests either inherently or explicitly identify the particular data units to which they correspond. Although explicit identification is preferred, inherent identification of a data unit may be achieved in the case where, for example, only a single data unit is at issue. Furthermore, each print request either inherently or explicitly identifies a targeted printing device such that different data units could be output by different printing devices. Again, explicit identification of printing devices is preferred. However, inherent identification of a printing device may occur, for example, where a default printing device is predetermined and assumed.

Subsequent to the transmission of the print request(s), any one or combination of several steps may occur. In particular, at step 412, the wireless communication unit receives one or more acknowledgments corresponding to the one or more print requests. Preferably, each acknowledgment uniquely identifies or otherwise corresponds to a particular print request. Receipt of an acknowledgment can be used by the control function of the wireless communication unit to indicate to the user that the print request was properly received. Alternatively, failure to receive the acknowledgment indicates to the control function that the print request was not received. In this case, the control function can either automatically resend the print request or query the user for further instructions. In addition or as an alternative to the acknowledgment of step 412, the wireless communication unit can also receive a scheduled printing time at step 414 in response to one or more print requests. A separate scheduled printing time is preferably sent in response to each print request, although it is possible to send a single printing time response to more than one print request. Regardless, the scheduled printing time can be provided to the user thereby letting him/her know when the data unit will be printed. The scheduled printing times are preferably predetermined when a particular system is initially configured. Alternatively, or in response to, the step of receiving the scheduled printing time, a user may also supply a requested printing time at step 416. The requested printing time for a particular print request can be included with that print request or transmitted subsequent to the print request. For example, in the latter case, a user, upon receiving notification of the scheduled printing time may desire to respond with a requested printing time more in line with the user's particular needs.

FIG. 5 illustrates operation of infrastructure equipment in accordance with one embodiment of the present invention. As used herein, the term infrastructure equipment includes all elements, other than the wireless communication unit, used to print a data unit. For example, with reference to FIG. 1, this includes the wireless network 104, the service provider 106, the content or advertising providers 130, 140, the document server 108, network 110, computer 112 and printing device 114. At step 502, information regarding at least one data unit is transmitted to a wireless communication unit. This is accomplished by transmitting the information via the wireless network 104. As noted above, this step may comprise sending notifications and the like regarding the data units or actually sending the data units themselves. Where an electronic assistant is used, a service provider, e.g., 106, provides the information regarding the data units. In the case where the data units are provided directly to the wireless unit, such information may be provided by the source of the data unit, e.g., service provider 106, document server 108, content provider 130 or advertising provider 140.

At step 504, one or more print requests are received, via the wireless network 104, in response to the information transmitted at step 502. As noted above, each print request identifies, either inherently or explicitly, one or more particular data units and corresponding targeted printing devices. In response to the one or more print requests, acknowledgments to each of the print requests can be sent, via the wireless network 104, at step 506. Such acknowledgments can be initiated by the wireless network once the print requests have been correctly received or, preferably, once the designated data units have been stored. In this regard, the data units designated in the at least one print request are stored to a print queue at step 508. In a preferred embodiment, the print queue is implemented within the document server 108. However, other storage locations may be equally employed. In addition to the data units themselves, information needed to deliver each data unit (i.e., the targeted printing device) is also stored with each data unit in the print queue. In a preferred embodiment, each user of automated document delivery system 101 is allocated a separate print queue within the document server 108.

Once stored in the print queue, the data units are sent to the appropriate destinations according to designated print times or on a periodic basis. This is illustrated in FIG. 5 at steps 510 through 516. In particular, at step 510, an entity controlling the print queue can cause a scheduled print time to be sent to the wireless communication unit. Alternatively, a requested print time can be received at step 512 from the wireless communication unit. In this manner, a print time (either scheduled or requested) is designated for each data unit in the print queue. When the designated print time for a particular stored data unit comes to pass, the data unit is sent, at step 516, via the network 110 to the computer 112 for printing on the printing device 114. In the event that the data unit cannot be delivered or printed, the data unit is maintained in the print queue until such time as it is successfully printed. In this case, the data unit can be retried at the next available print time, after a predetermined interval, or periodically. Other retry schemes will be readily apparent to those having ordinary skill in the art.

As an alternative to printing times as described above, the print queue can be periodically checked at step 514 to determine if any data units are stored therein. When stored data units are detected, the are instantly sent to the targeted printing device or devices. Once again, retry techniques may be employed in the event printing is not achieved the first time.

The present invention as described above provides a technique for printing data via a wireless communication unit. This is achieved by storing one or more data units in a print queue in response to print requests transmitted by the wireless communication unit. In this manner, data units may be conveniently and reliably printed using a wireless device. What has been described above is merely illustrative of the application of the principles of the present invention. Those skilled in the art can implement other arrangements and methods without departing from the spirit and scope of the present invention.

## Claims

1. A method for remotely printing at least one data unit via a wireless communication device (102, 200), the method comprising steps of:
wirelessly receiving, by the wireless communication device, at least some information corresponding to the at least one data unit (402);
receiving, by the wireless communication device, selection data corresponding to one of the at least one data unit in response to the at least some information (408); and
wirelessly transmitting, by the wireless communication device, a print request based on the selection data and corresponding to the one of the at least one data unit (410),
wherein the print request causes the one of the at least one data unit to be stored to a print queue (306, 508).

2. The method of claim 1, further comprising a step of:
receiving, by the wireless communication unit, an acknowledgment of the print request (412).

3. The method of claim 1, further comprising steps of:
receiving, by the wireless communication device, a scheduled printing time corresponding to the one of the at least one data unit (414).

4. The method of claim 1, further comprising a step of:
transmitting, by the wireless communication device, a requested printing time corresponding to the one of the at least one data unit (416),
wherein the one of the at least one data unit is to be printed at the requested printing time (518).

5. A method for remotely printing at least one data unit via a wireless communication device, the method comprising steps of:
wirelessly transmitting, to the wireless communication device, at least some information corresponding to the at least one data unit (502);
wirelessly receiving, from the wireless communication device, a print request corresponding to one of the at least one data unit (504);
storing the one of the at least one data unit to a print queue in response to the print request (306, 508); and
printing the one of the at least one data unit from the print queue (308, 518).

6. The method of claim 5, wherein the step of printing further comprises the step of printing the one of the at least one data unit from the print queue at a scheduled printing time (518).

7. The method of claim 5, further comprising a step of:
sending, to the wireless communication device, a scheduled printing time corresponding to the one of the at least one data unit stored in the print queue (514).

8. The method of claim 5, further comprising a step of:
receiving, from the wireless communication device, a requested printing time corresponding to the one of the at least one data unit stored in the print queue (516),
wherein the step of printing further comprises the step of printing the one of the at least one data unit from the print queue at the requested printing time (518).

9. The method of claim 5, further comprising steps of:
periodically determining whether there are any data units in the print queue (512),
wherein the step of printing further comprises the step of printing the one of the at least one data unit from the print queue when there are data units in the print queue (518).

10. A wireless communication unit (102, 200) comprising:
a controller (202);
a wireless transceiver (204) coupled to the controller; and
at least one user interface device (206) coupled to the controller,
wherein the controller functions to receive, via the wireless transceiver, at least some information corresponding to at least one data unit and to receive, via the at least one user interface device, selection data corresponding to one of the at least one data unit in response to the at least some information and to send, via the wireless transceiver, a print request based on the selection data and corresponding to the one of the at least one data unit, wherein the print request causes the one of the at least one data unit to be stored to a print queue.
